Europäisches Patentamt

European Patent Office

Office européen des brevets

(11) Numéro de publication: **0 341 157**
A1

# DEMANDE DE BREVET EUROPEEN

(21) Numéro de dépôt: **89401256.6**

(22) Date de dépôt: **03.05.89**

(51) Int. Cl.⁴: **B 25 J 17/02**
B 25 J 19/06, B 25 J 19/02

(30) Priorité: **03.05.88 FR 8805914**

(43) Date de publication de la demande:
**08.11.89 Bulletin 89/45**

(84) Etats contractants désignés:
**CH DE ES FR GB IT LI SE**

(71) Demandeur: **AFMA ROBOTS**
**17, 23 rue Joliot Curie Z.I. de St-Avertin**
**F-37170 Chambray les Tours (FR)**

(72) Inventeur: **Malot, Joel**
**La Ripaudière Sorigny**
**F-37250 Veigne (FR)**

(74) Mandataire: **Robert, Jean-Pierre et al**
**CABINET BOETTCHER 23, rue la Boétie**
**F-75008 Paris (FR)**

(54) **Dispositif de liaison élastiquement déformable à seuil de sécurité d'au moins deux pièces déplaçables ensemble.**

(57) L'invention concerne un dispositif de liaison élastiquement déformable (10) à seuil de sécurité dans lequel les deux pièces reliées (2,4) sont déplaçables ensemble au moyen d'organes d'entraînement non représentés, agissant sur l'une d'elles (2). Le mouvement relatif des pièces doit être de faible amplitude et limité pour éviter la détérioration du dispositif. Selon l'invention cette limite est détectée au moyen de deux fibres optiques (31,32) entre lesquelles un faisceau lumineux peut être établi et interrompu au droit de couples non parallèles de surfaces parallèles mobiles l'une par rapport à l'autre (23, 20 ; 25, 26) selon que leur déplacement relatif dépasse ou non une amplitude acceptable.

FIG. 1

EP 0 341 157 A1

## Description

## Dispositif de liaison élastiquement déformable à seuil de sécurité d'au moins deux pièces déplaçables ensemble

Dans le domaine des robots, manipulateurs.... il est avantageux de disposer entre l'extrémité du robot ou du manipulateur et son effecteur (préhenseur ou autre dispositif) un support dit "auto-adaptatif" permettant un mouvement relatif multidirectionnel de faible amplitude entre cette extrémité et le préhenseur. Ce mouvement est très utile pour encaisser les déplacements relatifs des pièces d'******ûs à une collision ou à un choc quelconque, car il évite de fausser des liaisons rigides.

Lorsqu'un robot comporte, ou coopère avec des moyens de reconnaissance qui lui permettent de s'adapter aux aléas de position, de dimension, ou d'orientation de l'environnement avec lequel il travaille, il est nécessaire de mettre en oeuvre, non seulement des capteurs de mesure appropriés, mais encore une programmation et des asservissements susceptibles d'opérer de façon auto-adaptative les corrections nécessaires.

La mise en oeuvre de ces moyens, de ces capteurs, de cette programmation et de ces asservissements, techniquement coûteuse, n'est justifiée que si les opérations à effectuer requièrent une grande précision ou si les matériaux des pièces concernées présentent une certaine fragilité.

Dans un grand nombre d'applications pratiques, par exemple pour celles concernant la manutention, il a été possible de réduire les coûts techniques en question, grâce à la mise en oeuvre de systèmes, dispositifs ou moyens d'adaptation faisant appel par exemple à des montages élastiques ou déformables présentant plusieurs degrés de liberté. Ces derniers sont ainsi déformables sur des plages limitées, que ce soit linéairement ou de façon rotative. Cette faculté d'adaptation passive qui est généralement conférée au préhenseur d'un robot, est définie fréquemment par le mot anglo-saxon correspondant "compliance".

Cette déformation limitée doit être constamment surveillée, afin d'arrêter le robot si les limites acceptables de déformation venaient à être dépassées. Pour ce faire, on utilise des moyens de détection simples, tels que des interrupteurs de fin de course, afin d'arrêter le fonctionnement du robot.

La mise en oeuvre de ces interrupteurs crée toute-fois des problèmes de plus en plus complexes au fur et à mesure que s'élève la nombre de degrés de liberté à surveiller, de sorte que la fiabilité de l'installation peut se trouver affectée par les risques d'apparition de défauts supplémentaires, imputables à la présence des circuits complexes correspondants. D'autre part, ces détecteurs présentent fréquemment des phénomènes d'hystérésis nuisibles à leur fidélité. De plus, ils sont de masse non négligeable et occupent également des volumes encombrants.

On connaît, notamment par le document GB-A-2 189 769, des dispositifs de détection de déplacement d'une pièce par rapport à une autre qui utilisent l'interruption d'un faisceau lumineux établi entre un émetteur et un récepteur lorsque le déplacement a dépassé une amplitude déterminée. Dans ce cas, soit le faisceau n'aboutit plus au récepteur, ce qui constitue le signal exploitable, soit il est interrompu par un obstacle s'interposant, dans le mouvement, entre l'émetteur et le récepteur. Ces dispositifs ne permettent que la détection de mouvements décomposables au plus autour de deux axes : mouvements plan sur plan, rotation autour d'un axe combinée ou non à une translation le long de cet axe, ou rotation autour d'un point.

Dans les dispositifs compliants du genre de ceux rappelés ci-dessus, la déformabilité admise ne se résume généralement pas à deux directions. Il est donc nécessaire de disposer d'un dispositif de sécurité surveillant la déformation au moins selon trois degrés de liberté, par exemple un mouvement plan sur plan augmenté d'une translation perpendiculaire à ce plan, rotation autour de deux axes distincts avec ou non translation le long de l'un et/ou l'autre de ces axes.

La multiplication de ces dispositfs optiques est à éviter pour ne pas augmenter l'encombrement des supports auto-adaptatifs.

L'invention a pour objet un dispositif de liaison de deux pièces formant un système compliant, dans lequel est intégré un dispositif de détection simple et fiable du dépassement des limites de déformabilité de ce système permettant de supprimer les inconvénients ci-dessus mentionnés.

L'invention a donc plus précisément pour objet un dispositif de liaison élastiquement déformable, d'au moins une première et une seconde pièces déplaçables ensemble au moyen d'organes d'entraînement agissant sur l'une d'elles, autorisant un mouvement relatif de ces pièces d'amplitude limitée et déterminée lorsque l'autre pièce est entravée au cours du déplacement d'ensemble, ce dispositif comportant au moins une pièce intermédiaire et un organe de détection du dépassement de l'amplitude limitée susdite comprenant un faisceau lumineux établi entre un émetteur solidaire de la première pièce et un récepteur solidaire de la seconde pièce.

Selon une caractéristique importante de l'invention:
- chacune des première et seconde pièces comporte une partie placée au voisinage d'une partie correspondante de la pièce intermédiaire de manière que la première pièce et la pièce intermédiaire et que la seconde pièce et la pièce intermédiaire présentent en regard l'une de l'autre des surfaces parallèles, écartées d'une distance faible restant sensiblement constante lors de leurs mouvements relatifs, les couples de surfaces ainsi définis n'étant pas parallèles entre eux.
- des canaux internes sont ménagés dans les première et seconde pièces pour déboucher sensiblement perpendiculairement aux couples de surfaces correspondants, en regard du débouché correspondant d'un canal interne ménagé dans la pièce intermédiaire et dont chaque extrémité aboutit à la surface correspondante.

- et le faisceau lumineux est établi dans ces canaux internes depuis l'émetteur solidaire de la première pièce jusqu'au récepteur solidaire de la seconde pièce pour traverser en série les couples de surface parallèle tant que l'amplitude du mouvement relatif des pièces est inférieure à l'amplitude limitée susdite.

L'invention sera mieux comprise au cours de la description de modes de réalisation donnés ci-après à titre d'exemples non limitatifs qui permettra d'en dégager les avantages et les caractéristiques secondaires.

Il sera fait référence aux dessins annexés dans lesquels :

    - la figure 1 est un schéma d'une liaison conforme à l'invention appliquée à un préhenseur, dans laquelle il existe trois degrés de liberté;

    - la figure 2 est une vue de détail de la figure 1,

    - la figure 3 est une variante de réalisation de la figure 1 dans laquelle un degré de liberté est constitué par une rotation autour d'un axe,

    - la figure 4 est une variante de réalisation de la figure 3,

    - la figure 5 est un schéma montrant une généralisation possible du dispositif selon l'invention.

Dans ce qui suit, le dispositif de liaison selon l'invention est illustré dans une application à l'extrémité d'un bras de robot préhenseur.

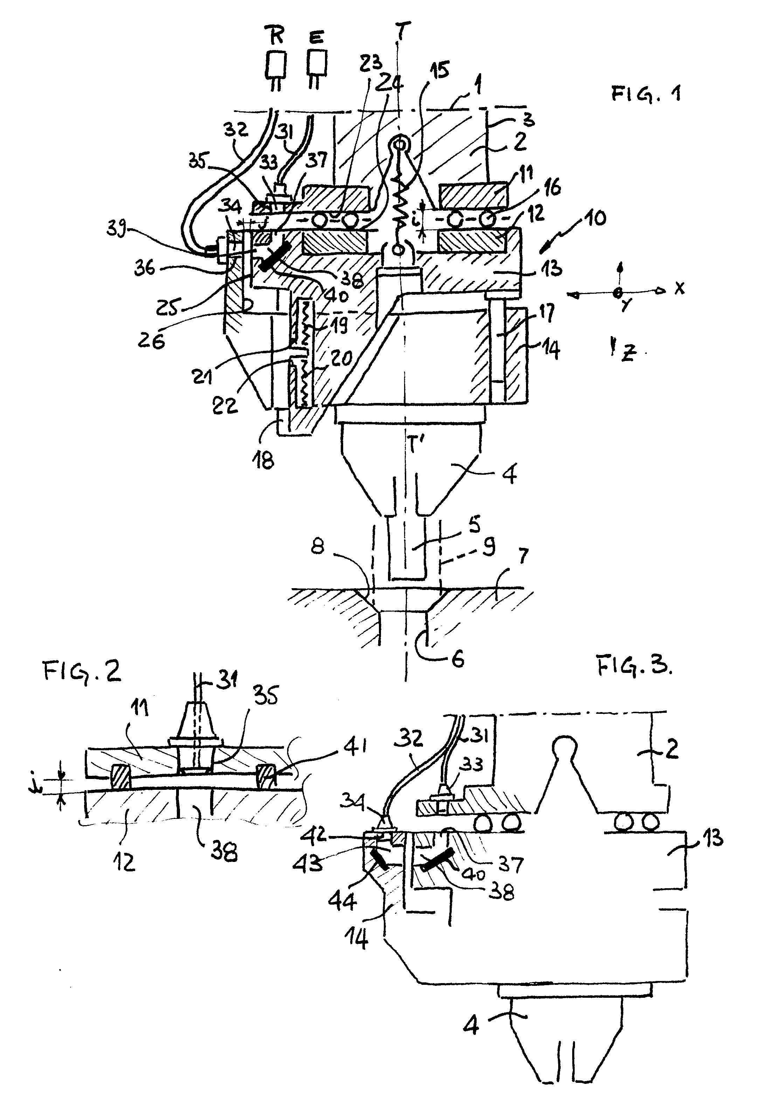

La figure 1 représente l'extrémité 2 d'un bras 3 appartenant à un robot ou à un poignet de robot, non représenté, mais schématisé par le trait mixte 1. Cette extrémité 2 est terminée par une pince 4 qui est destinée à saisir un objet 5 ayant, par exemple, une forme cylindrique. Cet objet doit, dans l'exemple représenté, être introduit verticalement dans une ouverture cylindrique 6 qui est ménagée dans un corps 7 et qui présente un diamètre légèrement supérieur à celui de l'objet.

Compte tenu des variations de position relatives entre la pièce 5 et le corps 7, indépendamment de la program mation du robot, on a ménagé un chanfrein 8 sur l'entrée de l'ouverture 6. Lorsqu'une excentration se présente entre les axes de l'objet, et de l'ouverture, il est nécessaire de disposer entre la pince 4 et le poignet 1 un système souple déformable élastiquement 10 permettant l'alignement des axes au cours du mouvement vertical d'introduction de la pièce 5 dans l'ouverture cylindrique 6, sans qu'il y ait déplacement ou commande de déplacement du robot 1. Cette liaison 10, dite système de compliance, donne à l'extrémité du robot une certaine faculté d'auto-adaptation aux situations rencontrées. Il existe cependant des limites à la déformation possible du système de liaison 10, les limites étant pour l'exemple représenté, définies par le cylindre 9 tangent à la pièce 5 lorsque les axes sont au maximum admissible de leur désalignement.

La liaison élastiquement déformable 10, ou système de compliance, possède dans l'exemple de la figure 1 deux degrés de liberté rectangulaires, l'un d'axe X dans le plan de la figure, l'autre d'axe Y perpendiculaire à ce plan et un troisième degré de liberté d'axe Z perpendiculaire au plan X Y.

Cette liaison comporte, pour assurer ces trois degrés de liberté, une plaque d'appui 11 située à l'extrémité 2 du poignet, une plaque d'appui 12 solidaire d'une pièce intermédiaire 13, et une pièce de support 14 pour la pince 4. Un organe élastique 15 relie la pièce intermédiaire 13 au poignet du robot 2 au travers des plaques 11 et 12 tandis qu'une pluralité de billes 16 est disposée entre les surfaces planes en regard des plaques d'appui .

La liaison de la pièce 14 de support de la pince 4 à la pièce intermédiaire 13 est schématisée sur la figure soit par un dispositif de colonne de guidage 17, soit par un dispositif de guidage à queue d'aronde 18, autorisant un déplacement relatif des pièces 13 et 14 le long de la direction Z, des ressorts 19 et 20 coopérant avec un ergot solidaire de la pièce 14, conférant à la liaison sa raideur et définissant la position de repos de ces deux pièces l'une par rapport à l'autre. L'amplitude du mouvement de la pièce 14 par rapport à la pièce 13 le long des colonnes 17 ou du dispositif 18 est limitée par des butées 21 et 22 qui coopèrent avec l'ergot susdit.

Les plaques 11 et 12 possèdent donc des surfaces 23, 24 en regard l'une de l'autre et parallèles. Ces surfaces restent lors des déplacements relatifs des pièces 2 et 13 parallèles entre elles et écartées d'une distance faible i restant sensiblement constante. La pièce 13 et la pièce 14 présentent également en regard l'une de l'autre, des surfaces parallèles 25, 26 issues des portions de surface pouvant être cylindriques, qui demeurent parallèles et à écartement constant faible j lors des mouvements relatifs des pièces 13 et 14.

Les intervalles i et j sont choisis les plus faibles possible afin de limiter au maximum les pertes de lumière du faisceau lumineux du dispositif de détection du dépassement des limites des déplacement tolérables entre la pince 4 et le poignet 2.

Ce dispositif de détection comporte deux fibres optiques 31, 32 dont les extrémités 33 et 34 aboutissent dans des ouvertures 35 et 36 ménagées respectivement dans les surfaces 23 et 26. La fibre optique 31 est reliée à un composant approprié telle qu'une diode électro-luminescente E, ou le cas échéant une lampe à incandescence placée en regard de son extrémité opposée à celle 33 logée dans l'orifice 35 tandis que la fibre 32 est destinée à collecter un faisceau lumineux par son extrémité 34 pour le conduire en direction d'un dispositif récepteur R tel par exemple qu'un photo-transistor ou une cellule photo-résistante, placé en regard de son extrémité opposée à l'extrémité 34.

En regard de l'ouverture 35 la pièce intermédiaire 13 présente à sa surface 24 une ouverture 37 qui est le débouché d'un canal 38, qui est coudé, et qui aboutit à une ouverture 39 ménagé sur la surface 2 de la pièce 13. Ce canal 38 possède un réflecteur (un miroir) 40 grâce auquel un faisceau lumineux pénétrant dans le canal 38 par l'ouverture 37 est dirigé vers l'ouverture 39. Cette ouverture 39 se trouve sensiblement en regard de l'ouverture 36 dans laquelle est logée l'extrémité 34 de la fibre 32.

Au repos l'axe de la pince 4 et l'axe de l'extrémité 2 du poignet de robot sont confondus selon une ligne T,T'. La pièce 2 du poignet de robot est celle qui est soumise à des organes d'entraînement permettant le déplacement dans l'espace du préhenseur. On comprend, grâce au dispositif de liaison, qu'il est possible de compenser le mésalignement entre l'axe de la pièce 5 qui, lors du transport, est sensiblement confondu avec l'axe T,T' du préhenseur, et l'axe de l'orifice 6 destiné à recevoir la pièce 5. En effet, lorsque on descend la pièce 5 dans le trou 6, le chanfrein 8 permet le recentrement de la pièce par rapport à l'orifice 6 et le décentrement de l'axe de la pièce 5 par rapport à l'axe du poignet de robot 2. L'effort s'opposant à ce décentrement dépendra de la contrainte donnée au ressort 15.

Il convient cependant d'arrêter le mouvement du robot si pour une raison quelconque, le décentrement des axes de la pièce et du poignet de robot excédait une valeur de consigne. Ce serait le cas, par exemple, lorsque , dans le déplacement d'extrémité du robot, la pièce 5 venait à heurter latéralement un obstacle ou que son mouvement soit entravé d'une manière ou d'une autre.

Un blocage latéral de la pièce 5 va entraîner un déplacement de la pièce 13 par rapport à la pièce 11 et le décalage de l'ouverture 35 par rapport à l'ouverture 37. Le faisceau lumineux qui était établi depuis l'émetteur E jusqu'au récepteur R en passant par le canal 38, en étant réfléchi sur le miroir 40, se trouve interrompu et le récepteur R émet un signal de défaut qui peut être, par exemple, exploité pour stopper le mouvement du robot.

Il se peut également que l'obstacle rencontré par la pièce 5 soit du type s'opposant à un mouvement vertical de cette dernière. Dans ces conditions c'est l'orifice 36 qui se décale par rapport à l'orifice 39 et le faisceau lumineux est aussi interrompu. Ce sera par exemple le cas si la pièce 5 rencontre la pièce 7 à l'extérieur des limites du chanfrein 8.

On comprend enfin que l'obstacle entravant le déplacement de la pièce 5 peut engendrer sur cette dernière et donc sur le préhenseur un effort qui possèdera une compensante paralaux directions X et Y et une composante parallèle à la direction Z, provoquant ainsi des décalages partiels des orifices 35 et 37 d'une part, et 36 et 39 d'autre part, conduisant globalement à une interruption du faisceau lumineux.

On voit, dans cette réalisation, que les deux occasions d'interruption du faisceau lumineux sont en série et qu'ainsi on peut déterminer indépendamment l'une de l'autre chacune des amplitudes limites acceptables, en fonction de l'amplitude limite acceptable du mouvement résultant final de la pince 4 par rapport à l'extrémité 2 du poignet. L'invention a pour avantage de pouvoir disposer un détecteur tridimensionnel dans un espace extrêmement restreint qui peut donc facilement équiper des préhenseurs de petite dimension. On parvient ainsi à une miniaturisation qui trouve un champ d'application très important.

La figure 2 qui est une vue agrandie de la figure 1 au niveau de l'orifice 25, montre que l'on peut mettre une barrière de protection 41 autour du faisceau établi dans l'intervalle i, cette barrière de protection pouvant être constituée par un joint ou un feutre évitant des perturbations par la lumière extérieure et isolant de l'atmosphère extérieure, l'espace dans lequel débouche 1 extrémité de la fibre 31 et le canal 38, ainsi préservé des poussières.

La figure 3 montre schématiquement une variante de réalisation de la figure 1, dans laquelle l'extrémité 34 de la fibre optique 32 n'est pas implantée directement dans l'ouverture 36 de la paroi, débouchant sur la surface 26, mais dans une ouverture 42 d'un canal 43 interne de la pièce 14 qui, étant coudé, possède également un miroir 44 pour renvoyer le faisceau lumineux en direction de l'ouverture 42. Cette disposition présente l'avantage de pouvoir grouper les fibres optiques 31 et 32 dans un conducteur unique, puisque l'on peut rendre très voisines les ouvertures qui reçoivent les extrémités de ces fibres.

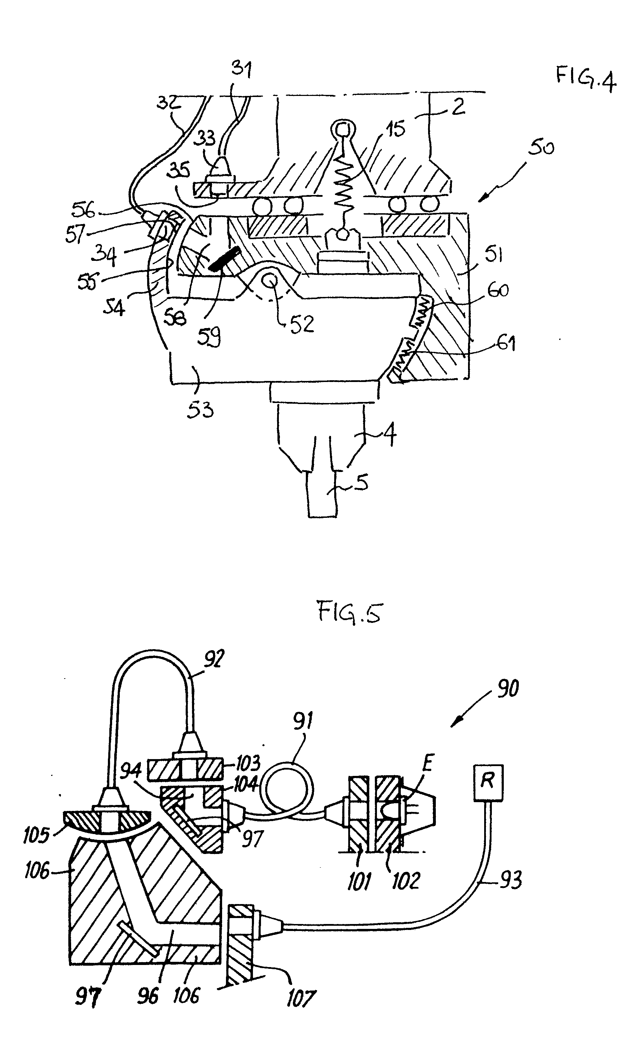

La figure 4 illustre une réalisation d'une liaison compliante entre une pince 4 et une extrémité de poignet 2 de robot, cette liaison 50 comporte une première partie de liaison semblable à la liaison, entre l'extrémité 2 et une pièce intermédiaire 51, laquelle pièce intermédiaire 51 comportant un axe d'articulation 52 parallèle au plan de déplacement relatif des pièces 2 et 50, et autour duquel est articulée une pièce 53 formant support de la pince 4. Cette pièce 52 possède une prolongation 54 portant une surface 55 de révolution autour de l'axe 52 et très faiblement écartée d'une surface extérieure cylindrique 56 d'axe 52, de la pièce 51. L'extrémité 34 de la fibre 32 est implantée dans une ouverture 57 normale à la surface 55 tandis que l'extrémité 33 de la fibre 31 est implantée dans l'ouverture 35 de la pièce 2. A l'intérieur de la pièce 51, un canal 58 possédant un miroir de renvoi 59 assure la propagation du rayon lumineux de la fibre 31 vers la fibre 32 lorsque la liaison compliante n'est pas sollicitée. Alors que la raideur de la liaison entre les pièces 2 et 51 est assurée par le ressort 15 de la figure 1, la raideur et la position de repos de la liaison entre les pièces 51 et 53 sont assurées par deux ressorts antagonistes 60, 61, agissant entre des butées de la pièce 51 et des butées de la pièce 53.

La figure 5 est un schéma illustrant une généralisation du contrôle par interruption de faisceau de la déformation générale d'une liaison plus complexe d'une succession de pièces. Par exemple, deux pièces 101,102 possèdent entre elles deux degrés de liberté coplanaires, deux pièces 103,104 possèdent également entre elles deux degrés coplanaires dans un plan perpendiculaire au précédent, des pièces 105 et 106 possèdent deux degrés de liberté dont l'un peut être linéaire (perpendiculairement au plan du schéma) et l'autre angulaire autour d'un axe perpendiculaire au plan du schéma, et enfin des pièces 106 et 107, entre lesquelles il existe deux degrés de liberté coplanaires dans un plan par exemple parallèle à celui du plan de déplacement relatif des pièces 101, 102. Entre les pièces 101 et 104, et 103 et 105, la conduction du faisceau lumineux peut être réalisée par des tronçons de fibres optiques 91, 92 si le mouvement entre les pièces 101 et 104 ou 103 et 105 n'a pas d'importance, ou si ces pièces sont solidaires 2 à 2. Dans les pièces 104 et 106 , on a prévu comme précédemment des canaux internes 94, 96 pourvus à leur coude de miroirs 97. Par ailleurs, comme on peut le voir sur cette figure, il est possible de disposer directement l'émetteur de lumière E sur la première pièce 102 de l'ensemble de pièces dont on contrôle la déformation.

Le chemin suivi par la lumière entre l'émetteur 30 et le récepteur R constitue en fait une porte logique ET de nature optique, qui bénéficie de tous les avantages liés à ce moyen de transmission de signaux, notamment l'insensibilité aux parasites, la bonne tenue mécanique aux vibrations, la simplicité de montage, l'absence de mesure d'isolement électrique, etc...

On comprend enfin que le fait d'avoir choisi un système de sécurité dans lequel l'absence de signal lumineux correspond à la présence d'un défaut, offre l'avantage supplémentaire de provoquer l'arrêt du robot si l'émetteur, le récepteur, ou l'une des fibres optiques venaient à être détériorés.

On mentionnera que les canaux internes décrits ci-dessus et équipés de miroirs peuvent être remplacés, lorsque les rayons de courbure le permettent, par des fibres optiques.


## Revendications

1. Dispositif (10) de liaison élastiquement déformable d'au moins une première (2,11) et d'une seconde (4,14) pièces déplaçables ensemble au moyen d'organes d'entraînement agissant sur l'une d'elles (2,11) autorisant un mouvement relatif de ces pièces d'amplitude limitée et déterminée lorsque l'autre pièce est entravée au cours du déplacement d'ensemble, ce dispositif comportant au moins une pièce intermédiaire (13) et un organe de détection du dépassement de l'amplitude limitée susdite comprenant un faisceau lumineux établi entre un émetteur (E) (33) solidaire de la première pièce (2) et un récepteur (R, 34) solidaire de la seconde pièce, caractérisé en ce que chacune des première (11) et seconde (14) pièces comporte une partie placée au voisinage d'une partie correspondante de la pièce intermédiaire (13) de manière que la première pièce (11) et la pièce intermédiaire (13) et que la seconde pièce (14) et la pièce intermédiaire présentant en regard l'une de l'autre des surfaces parallèles (23,24,25,26), écartées d'une distance faible (i, j) restant sensiblement constante lors de leurs mouvements relatifs, les couples de surfaces ainsi définis n'étant pas parallèles entre eux, en ce que des canaux internes (35,36) sont ménagés dans les première (2, 11) et seconde pièces (4,14) pour déboucher sensiblement perpendiculairement aux couples (23,24,25,26) de surfaces correspondants, en regard du débouché correspondant (37,39) d'un canal interne (38) ménagé dans la pièce intermédiaire et dont chaque extrémité aboutit perpendiculairement à la surface correspondante (24,25), et en ce que le faisceau lumineux est établi dans ces canaux (35,36,38) internes depuis l'émetteur (33) solidaire de la première pièce (11) jusqu'au récepteur (34) solidaire de la seconde pièce (14) pour traverser en série les couples de surfaces parallèles tant que l'amplitude du mouvement relatif des pièces est inférieure à l'amplitude prédéterminée.

2. Dispositif selon la revendication 1 caractérisé en ce que les canaux internes susdits sont équipés de tronçons fibre optique.

3. Dispositif selon la revendication 1 caractérisé en ce que les canaux internes susdits sont constitués par des perçages (38, 58, 74, 96), le perçage de la pièce intermédiaire comportant deux tronçons concourants se rejoignant sur un réflecteur (40,97).

4. Dispositif selon l'une quelconque des revendications précédentes caractérisé en ce que des moyens de protection (41) du faisceau sont disposés dans l'espace (i) d'écartement de deux surfaces parallèles adjacentes autour de chaque débouché de canal (38).

5. Dispositif selon l'une quelconque des revendications précédentes caractérisé en ce qu'il comporte plusieurs pièces intermédiaires (101, 103, 106)équipées de canaux (94,96) débouchant sur des surfaces parallèles aux pièces adjacentes.

6. Dispositif selon la revendication 5 caractérisé en ce que les canaux susdits sont constitués par des tronçons de fibres optique solidaires desdites pièces intermédiaires.

FIG. 1

FIG. 2

FIG. 3.

EP 0 341 157 A1

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A, D | GB-A-2189769 (MECANOTRON) <br> * page 5, ligne 80 - ligne 115; revendications 17, 18 * <br> --- | 1 | B25J17/02 <br> B25J19/06 <br> B25J19/02 |
| A | EP-A-0125775 (POLAROID) <br> * page 6, ligne 29 - page 7, ligne 8 * <br> * page 8, ligne 8 - ligne 16; figure 7 * <br> --- | 1 <br><br> 1 | |
| A | US-A-3921445 (HILL) <br> * colonne 4, ligne 29 - colonne 5, ligne 46 * <br> --- | 1 | |
| A | IBM TECHNICAL DISCLOSURE BULLETIN. <br> vol. 26, no. 9, février 1984, NEW YORK US <br> page 4457 - 4462; BRENNEMANN: <br> "ROBOT POSITION AND ORIENTATION SENSOR" <br> * page 4457 - 4460 * <br> --- | 1, 2 | |
| A | EP-A-0044245 (SOURIAU) <br> --- | | |
| A | US-A-4638231 (MONFORTE) <br> ----- | | |

DOMAINES TECHNIQUES
RECHERCHES (Int. Cl.4 )

B25J

Le présent rapport a été établi pour toutes les revendications

| Lieu de la recherche | Date d'achèvement de la recherche | Examinateur |
|---|---|---|
| LA HAYE | 09 AOUT 1989 | LAMMINEUR P.C.G. |